(19) Europäisches Patentamt / European Patent Office / Office européen des brevets

(11) **EP 3 273 214 B1**

(12) **FASCICULE DE BREVET EUROPEEN**

(45) Date de publication et mention
de la délivrance du brevet:
**02.09.2020   Bulletin 2020/36**

(51) Int Cl.:
***G01L 17/00*** *(2006.01)*

(21) Numéro de dépôt: **17177027.4**

(22) Date de dépôt: **21.06.2017**

(54) **PROCEDE DE MESURE DE LA PRESSION DE GONFLAGE DES PNEUMATIQUES EQUIPANT UN VEHICULE EN DEPLACEMENT SUR UNE VOIE DE CIRCULATION**

VERFAHREN ZUR MESSUNG DES REIFENDRUCKS VON REIFEN EINES FAHRZEUGS IN BEWEGUNG AUF EINER FAHRSPUR

METHOD FOR MEASURING THE INFLATION PRESSURE OF TYRES FITTED ON A VEHICLE TRAVELLING ON A ROADWAY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **18.07.2016   FR 1656812**

(43) Date de publication de la demande:
**24.01.2018   Bulletin 2018/04**

(73) Titulaire: **PI System Automation
63540 Romagnat (FR)**

(72) Inventeurs:
• **BARNICHON, Pascal
03700 BELLERIVE SUR ALLIER (FR)**
• **BRANDELY, Benoît
63310 SAINT ANDRE LE COQ (FR)**
• **RAMILLIEN, Gilles
63200 MENETROL (FR)**

(74) Mandataire: **Dennemeyer & Associates S.A.
Postfach 70 04 25
81304 München (DE)**

(56) Documents cités:
**DE-A1-102010 026 730**

EP 3 273 214 B1

**EP 3 273 214 B1**

**Description**

La présente invention concerne un procédé de mesure de la pression de gonflage des pneumatiques équipant un véhicule en déplacement sur une voie de circulation.

Ici, le terme « véhicule » doit être compris dans son acceptation la plus large. Il désigne tout type de véhicules destinés au transport de passagers et/ou de marchandises, à conduite humaine ou automatique, automoteur ou non, qui se déplacent sur une voie, que ce soit en extérieur ou en espace confiné. Par voie, on désigne ici la surface de la zone de roulage des pneumatiques. Il s'agit de la zone sur laquelle se déplace le véhicule : une route, une voie ferrée ou toute autre surface, privée ou publique, adaptée à assurer le déplacement d'un véhicule.

Les types de véhicules concernés par l'invention utilisent comme organes de liaison à la zone de roulage, que ce soit en porteur et/ou en guidage, des pneumatiques, éventuellement associés à d'autres moyens.

Par la suite, l'invention sera décrite en référence à un véhicule ferroviaire, notamment un métro sur pneus. De même, pour plus de lisibilité, les termes pneus ou pneumatiques seront indifféremment employés. Les expressions « voie de circulation » et « chemin de roulage » seront indifféremment utilisées pour désigner la surface de la zone de roulage sur laquelle se déplace le véhicule lors de la totalité de son trajet.

On conçoit que l'invention s'applique à tout type de véhicule équipé de pneus, lors de son déplacement sur une zone de roulage. A titre d'exemples non limitatifs comme type de véhicules, on peut citer un tramway sur pneu, une berline de mine, un funiculaire, des voitures de tourisme, des camions, des autobus, des engins de chantier, des engins agricoles, forestiers ou autre.

L'utilisation de pneus comme organes de liaison avec la zone de roulage implique, à la différence d'autres types d'organes de liaison tels que des roues en acier, de contrôler régulièrement la pression de gonflage des pneumatiques, afin de garantir une sécurité optimale. Un contrôle de la pression des pneus lorsque le véhicule est à l'arrêt n'est envisageable que lorsque la durée de l'arrêt du véhicule est suffisante pour permettre un tel contrôle. Un tel contrôle, selon le nombre de pneumatiques à contrôler sur le véhicule dure de quelques minutes à plus d'une heure lorsque l'on contrôle tous les pneus équipant un métro sur pneus comportant plusieurs voitures. En d'autres termes, un contrôle de la pression lors de l'arrêt du véhicule n'est raisonnablement envisageable qu'avant la prise de service du véhicule ou en fin de service. En d'autres termes, un contrôle de la pression à l'arrêt est donc pour le moins fastidieux à mettre en œuvre et n'est pas réalisable avec une fréquence élevée.

Une telle opération de contrôle de la pression des pneumatiques se doit, pour des raisons évidentes de sécurité, être effectuée le plus régulièrement possible, cela, autant que possible, sans gêner le déplacement du véhicule. Pour cela, il est connu de mesurer la pression de gonflage des pneus lors du roulage du véhicule, en l'espèce une voiture de métro sur pneu, sans affecter sa vitesse de déplacement.

Cette mesure est basée sur les relations qui existent entre la pression de gonflage d'un pneu et la contrainte que le pneu exerce sur un capteur situé sur la surface de roulage du pneu. On conçoit que ces relations ne sont vérifiées que si le pneu est dans des conditions d'utilisation prédéfinies, en particulier en matière de charge verticale, induite par le poids du véhicule et supportée par le pneu. Il est alors possible, en analysant les contraintes exercées par la surface du pneumatique en contact avec le capteur, de définir si la pression mesurée indique que le pneu est sous gonflé ou sur gonflé, et donc de prendre les mesures compensatrices nécessaires concernant le gonflage dudit pneu.

Pour effectuer ces mesures, des capteurs de pression, connus en soi et en nombre suffisant, sont positionnés sur les voies de circulation du véhicule de sorte à mesurer les pressions exercées par les pneumatiques du véhicule, qu'il s'agisse de pneus porteurs ou de pneus non porteurs dits de guidage.

A partir de mesures effectuées avec des pneus dont la pression de gonflage est connue, de manière avantageuse mais non obligatoire, la relation entre la pression de

gonflage du pneu et la pression qu'il exerce sur la surface de roulage est établie, afin d'obtenir une fiabilité et une représentativité optimales des mesures.

On connait par DE-A-10210026730 un dispositif de mesure de la pression des pneus d'un véhicule en mouvement. Des moyens optiques déterminent la largeur du pneu lors de son passage sur une surface équipée de capteurs de force. Ces capteurs permettent de déterminer les dimensions de la zone de contact du pneu et le temps de contact sur la zone de roulage. Par comparaison des valeurs obtenues avec celles d'une base de données, et après application d'une éventuelle correction tenant compte de la température de mesure, une valeur de la pression de gonflage est déduite. Un tel dispositif nécessite deux types de capteurs différents.

Or, il s'avère que les mesures de la pression exercée par le pneu sur un capteur peuvent être faussées dans certaines conditions d'utilisation. En particulier la mesure n'est plus fiable lorsque se produit un mouvement d'oscillation vertical du pneu lors de son passage sur le capteur. Un tel mouvement a lieu, par exemple, lorsque les suspensions du véhicule sont dégradées et/ou lorsque que la surface de roulage n'est pas plane. Il est également constaté des différences de mesure selon l'essieu du véhicule sur lequel est monté le pneu.

C'est à ces inconvénients qu'entend plus particulièrement remédier l'invention en proposant un procédé de mesure de la pression de gonflage d'un véhicule en déplacement, quel que soit l'état des suspensions du véhicule, dans des limites fonctionnelles, de la surface de roulage, cela sans modification de la rapidité de mesure du ou des capteurs.

A cet effet, l'invention a pour objet un procédé de mesure de la pression de gonflage des pneumatiques équipant un véhicule en déplacement conformément à la revendication 1.

Selon des aspects avantageux mais non obligatoires de l'invention, un tel procédé peut comprendre une ou plusieurs des étapes suivantes:

- lors d'une étape supplémentaire f), préalable à l'étape d), la longueur (Lpneu) de la bande de roulement du pneumatique en contact avec ledit capteur fixé au chemin de roulage lors de la mesure effectuée à l'étape a) est établie selon une relation définie par : Lvide=Lpneu-K.FC prenant en compte la charge appliquée audit pneumatique, avec Lvide étant la longueur de contact du pneu sur le chemin de roulage lorsqu'il est soumis à une charge dite à vide, donc avec un pneu monté sur un véhicule sans passager et/ou marchandise, K étant un coefficient correspondant à la différence entre les longueurs de la bande de roulement à charge maximale (Lmax), donc un pneu monté sur un véhicule avec une charge maximale et à vide (Lvide) et FC un facteur de charge variant de 0 à 1 selon que le véhicule est à vide ou à charge maximale, ledit facteur de charge FC étant déterminé par la relaton FC=(Lmoyen-Lmin)/(Lmax-Lmin), avec Lmoyen étant la longueur de contact moyenne mesurée sur l'ensemble des pneus du véhicule, Lmax et Lmin étant respectivement les longueurs de contact du pneu mesurées par le capteur de pression avec un véhicule à charge maximale ey à vide, les pneus étant gonflés à la pression de gonflage nominale PpneuN.
- Les étapes a) à c) sont réalisées avec plusieurs capteurs de pressiofixés au chemin de roulage et ce sont chacune des valeurs obtenues par capteur qui sont utilisées pour les étapes d), e) et g).

L'invention sera mieux comprise et d'autres avantages de celle-ci apparaitront plus clairement à la lecture de la description qui va suivre d'un mode de réalisation de l'invention, donnée à titre d'exemple non limitatif et faite en référence au dessin suivant dans lequel:

- La figure 1 est un schéma illustrant la position d'au moins un capteur de pression par rapport à un pneu pour la mise en œuvre d'un procédé conforme à un mode de réalisation de l'invention,
- les figures 2A à 2C illustrent schématiquement, en vue latérale, la longueur de la bande de roulement d'un pneu en contact avec un capteur de pression selon trois états de gonflage du pneu,
- les figures 3A à 3C illustrent schématiquement la configuration de la bande de roulement d'un pneu, vu de face, selon trois états de gonflage du pneu,
- la figure 4 est un ensemble de trois courbes simplifiées illustrant la variation de la pression au sol en fonction du temps, selon l'état de gonflage du pneu,
- les figures 5 et 6 sont des courbes schématiques illustrant respectivement l'évolution de la pression de gonflage selon la longueur de la bande de roulement du pneu en contact avec le sol et selon la forme de la courbe et
- la figure 7 illustre les fonctions d'appartenance aux sous-ensembles flous définis pour une des grandeurs, ici la pression au sol Psol.

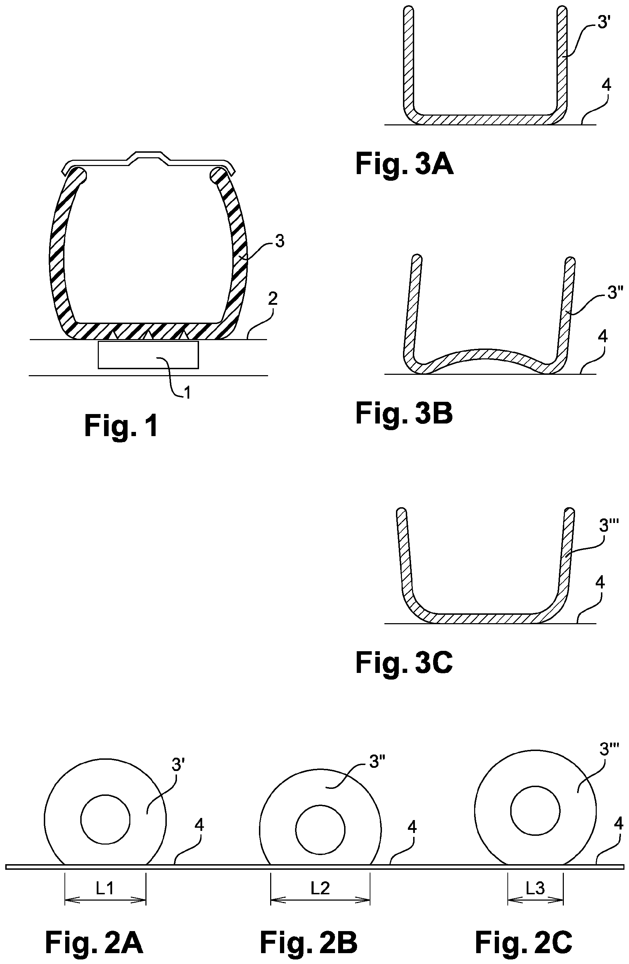

La figure 1 illustre schématiquement un capteur de pression 1 utilisé pour la mise en œuvre du procédé. Ce capteur de pression 1 est fixé dans une partie 2 d'un chemin de roulage 4 sur lequel se déplace un pneumatique 3. On conçoit que le nombre et la disposition du ou des capteurs de pression sont adaptés au chemin de roulage et au(x) pneumatique(s) dont on veut mesurer la contrainte qu'il(s) exerce(nt) sur le chemin de roulage. Certains capteurs de pression sont fixés au sol et sont adaptés pour recevoir un pneumatique porteur. D'autres capteurs de pression sont fixés perpendiculairement aux premiers et sont adaptés à la mesure de la pression de pneus dits de guidage. Les pneus de guidage assurent le guidage latéral de certains types de véhicules, en particulier de véhicules ferroviaires tels que les métros sur pneus. De tels pneus de guidage ne sont pas porteurs au sens où la charge du véhicule ne s'applique pas, au moins de manière significative, à ces pneus. Il est à noter que l'invention est mise en œuvre avec des capteurs de pression, connus en soi. Il s'agit donc ici de capteurs de mesure d'une force rapportée à une unité de surface. Par la suite, l'ensemble des valeurs et caractéristiques mesurées et prises en compte dans l'invention sont uniquement des valeurs relatives à une pression, en référence à des mesures réalisées par des capteurs de pression tels que définis précédemment.

Les figure 2A à 2C illustrent la relation entre la pression de gonflage d'un pneu et la longueur de la bande de roulement du pneu qui est en contact avec le chemin de roulage, donc de facto avec le capteur de pression lorsque ce dernier est présent sur le chemin de roulage. La figure 2A illustre un pneu 3' dont la pression de gonflage est nominale, c'est-à-dire un pneu gonflé à la pression préconisée par le fabricant pour un usage donné.

On note L1 la longueur de la bande de roulement qui est en appui sur le chemin de roulage 4, étant entendu qu'un capteur de pression, non illustré, est avantageusement fixé dans le chemin 4. Comme cela ressort de la figure 2B, lorsqu'un pneu 3", dont on conçoit qu'il puisse s'agir du même pneu que celui 3' de la figure 2A, est gonflé à une pression inférieure à la pression nominale préconisée, on note un écrasement du pneu sur le chemin de roulage, d'où une longueur L2 de la bande de roulement du pneu qui est en contact avec le chemin 4 supérieure à la longueur L1.

A l'inverse, comme représenté à la figure 2C, lorsque le pneu 3''' est sur-gonflé, donc gonflé à une pression supérieure à la pression nominale de gonflage, la longueur L3 de la bande de roulement en contact avec le chemin de roulage est réduite par rapport à la longueur L1. En d'autres termes, plus la pression de gonflage d'un pneu est élevée et plus la surface de sa bande de roulement en contact avec le sol est réduite.

Ces configurations se retrouvent aux figures 3A à 3C. A la figure 3A, la bande de roulement du pneu 3' présente une surface de contact optimale avec le chemin de roulage 4, selon la largeur du pneu. En d'autres termes, le pneu 3' est en contact sur toute sa largeur avec le chemin 4. En revanche, à la figure 3B, le pneu 3" étant sous gonflé on constate un affaissement de la bande de roulement du pneu 3" sur le chemin 4. Cela induit une courbure du pneu selon sa largeur. Cette courbure est orientée vers l'intérieur du pneu. En conséquence, il présente un zone creuse, qui n'est pas en contact avec le chemin 4. Inversement, comme cela apparait à la figure 3C, un pneu 3''' sur-gonflé présente une courbure inverse, donc orientée vers l'extérieur du pneu. De ce fait, la largeur de la bande de roulement en contact avec le chemin 4 est réduite.

Ainsi, on note que la pression de gonflage a un effet physique, visuel, sur les caractéristiques dimensionnelles de la bande de roulement d'un pneu, tant en ce qui concerne la longueur de la bande de roulement du pneu que la largeur de ladite bande de roulement du pneu.

La mesure de la pression de gonflage des pneus, notée par la suite Ppneu, est basée, de façon connue en soi, sur la relation qui existe entre la pression de gonflage d'un pneu et les contraintes exercées sur le sol par la partie de la bande de roulement de ce même pneu en contact avec le sol, lors de son roulage sur le sol. Cette contrainte, rapportée à une unité de surface, est de facto une pression exercée sur le sol. Elle sera notée par la suite Psol.

Un des intérêts de ce principe de mesure réside dans le fait qu'il ne nécessite aucune modification ou intervention au niveau des pneus et/ou des véhicules, quel que soient le type de pneus et/ou de véhicules, la mesure s'effectuant lors des déplacements du véhicule sur les chemins de roulage. Bien entendu, cela implique que les chemins de roulage soient équipés de capteurs de pression. Par ailleurs, un autre avantage de l'invention est de permettre une mesure à la vitesse nominale de déplacement du véhicule, sans qu'il soit nécessaire de ralentir ou d'accélérer le véhicule, et donc de modifier la fluidité du trafic, pour effectuer la mesure. Il est à noter également que l'invention ne nécessite pas de modifications des capteurs de pression, ni de leur nombre, lorsque ceux -ci sont déjà présent sur le chemin de roulage. Les capteurs de pression utilisés sont de dimensions réduites par rapport à la surface de contact du pneu, ce qui facilitent leurs mises en place sur un chemin de roulage.

Cette relation entre les deux pressions Ppneu et Psol est vérifiée lorsque le pneumatique est utilisé dans des conditions qui respectent les contraintes d'utilisation prescrites par le manufacturier du pneu. Entre autres, la charge appliquée sur le pneumatique, donc de facto le chargement du véhicule, doit rester dans les limites spécifiées d'utilisation du pneu. Il en est de même pour la pression de gonflage du pneu Ppneu et pour la température du pneu qui doivent rester dans les limites des spécifications d'utilisation du pneu.

En appliquant une telle relation, on peut déterminer la pression de gonflage Ppneu, quel que soit la charge subie par le pneu, donc quel que soit le nombre de passager et/ou la quantité de marchandises dans le véhicule dont on veut mesurer la pression des pneus. Les différents cas susceptibles d'être rencontrés sont listés ci-après :

- I) la pression de gonflage Ppneu et la charge subie par le pneu sont nominales. Aux divers exemples, le terme nominal doit être compris comme relatif à une valeur, par exemple de pression, notée par la suite PpneuN, qui entre dans l'intervalle des pressions couramment rencontrées et préconisées par le fabricant.

Dans cette première configuration, la surface de contact entre le sol et la bande de roulement du pneu est également nominale. Ainsi la pression exercée au sol Psol est nominale, ce qui correspond bien à un pneu avec une pression de gonflage nominale PpneuN.

- II) La pression de gonflage Ppneu est inférieure à la pression de gonflage nominale PpneuN et la charge subie est nominale.

Si le pneu est dégonflé et que la charge subie par le pneu est nominale, comme illustré aux figures 2B, 3B, la surface de contact entre la bande de roulement du pneu et le sol est plus grande. Ainsi la pression exercée au sol Psol, donc la force exercée sur le sol par unité de surface, pour une charge nominale est plus faible que la pression exercé au sol avec un pneu gonflé à la pression nominale PpneuN, ce qui correspond bien à un pneu dégonflé, donc Ppneu <PpneuN.

- III) La pression de gonflage du pneu est supérieure à la pression de gonflage nominale PpneuN et la charge subie nominale.

Si le pneu est surgonflé et que la charge du pneu est nominale, comme représenté aux figures 2C et 3C, la surface de contact entre la bande de roulement du pneu et le sol est plus faible. Ainsi la pression exercée au sol Psol, donc la force exercée sur le sol par unité de surface, pour une charge nominale est plus forte, ce qui correspond bien à un pneu surgonflé, donc à Ppneu >PpneuN.

- IV) La pression de gonflage du pneu est nominale et la charge subie est inférieure à la charge nominale.

Si la pression de gonflage du pneu PpneuN est nominale et que le pneu est en sous-charge, cette sous-charge a deux effets qui se compensent :
La pression exercée au sol Psol par le pneu est plus faible que la pression exercée au sol avec une charge nominale, mais la surface de contact entre la bande de roulement du pneu et le sol est plus faible, donc la pression exercée au sol est plus élevée.
Ainsi, avec la compensation mutuelle de ces deux effets la pression exercée au sol est nominale, ce qui correspond bien à une pression de gonflage du pneu nominale PpneuN.

- V) La pression de gonflage du pneu est nominale et la charge subie est supérieure à la charge nominale.

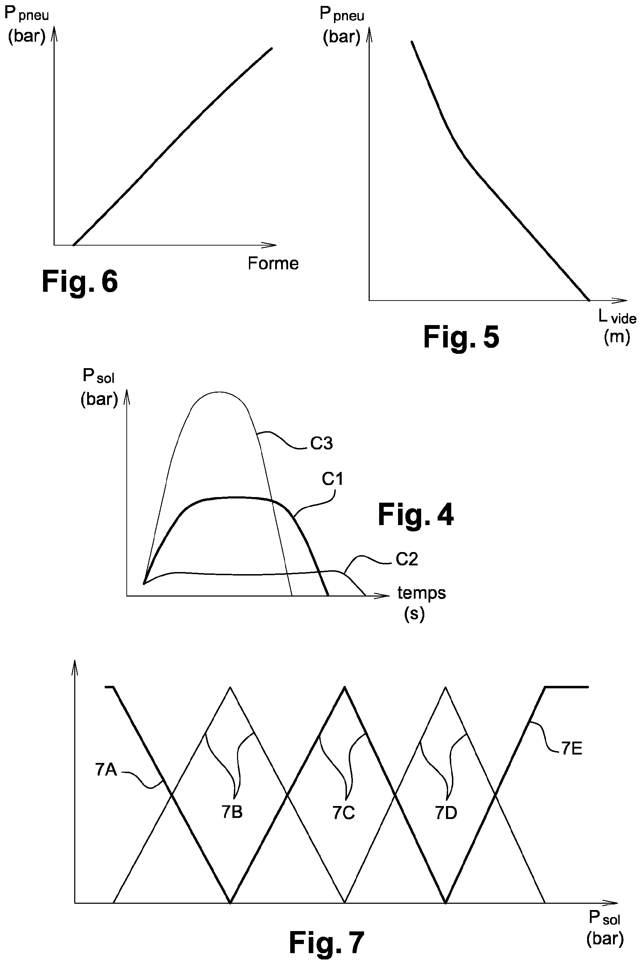

Si la pression de gonflage du pneu est nominale et que le pneu est en surcharge, cette surcharge a deux effets qui se compensent :
La pression exercée au sol est plus forte que la pression exercée au sol avec une charge nominale, mais la surface de contact de la bande de roulement du pneu avec le sol est plus grande que lorsque la charge est nominale. Donc la pression exercée au sol par la bande de roulement du pneu est plus faible. Ainsi, avec la compensation de ces deux effets la pression exercée au sol est nominale, ce qui correspond bien à un pneu avec une pression de gonflage nominale PpneuN.
On conçoit aisément que, pour effectuer de telles mesures, il convient d'utiliser plusieurs capteurs de pression, connus en soi, placés dans le chemin de roulage, dans la zone de roulage des pneus, qu'il s'agissent de pneus porteurs ou de guidage.
Les mesures réalisées de cette manière sont sujettes à variation. En particulier on observe, selon l'usure du pneu, une dégradation plus ou moins marquée de la bande de roulement, avec dans certains cas des pertes de gomme constitutive du pneu sur le chemin de roulage. Celle-ci présente alors, pour une pression de gonflage nominale PpneuN et une charge nominale, des dimensions et/ou une forme autres que celles observées avec un pneu neuf. Ainsi, pour limiter autant que faire se peut l'influence de l'état de la bande de roulement du pneu sur la mesure effectuée, on utilise plusieurs capteurs de pression pour la mesure de la pression au sol Psol d'un pneu. Un pneu roulant sur plusieurs capteurs de pression lors de son déplacement, on obtient, pour un même pneu, plusieurs mesures de la pression Psol qu'il exerce sur le chemin de roulage.
Selon que le pneu est gonflé à sa valeur nominale de gonflage : Ppneu = PpneuN, surgonflé : Ppneu > PpneuN ou sous gonflé : Ppneu <PpneuN on obtient différentes courbes illustrées à la figure 4.
Ces courbes représentent la variation de la pression Psol exercée par la bande de roulement sur le sol en fonction du temps de roulage du pneu sur le capteur de pression, cela selon l'état de gonflage du pneu. On obtient autant de courbes qu'il y a de capteurs, cela pour des mesures sur un même pneu. Ici, trois courbes C1, C2, C3 représentent, chacune de manière simplifiée, des pressions au sol Psol pour les divers cas de pression de gonflage d'un pneu telles que décrites précédemment. La courbe C1 illustre une pression Psol représentative d'une pression de gonflage nominale PpneuN. Les courbes C2 et C3 représentent respectivement une pression de gonflage Ppneu inférieure et supérieure à la pression PpneuN, donc dans les cas d'un pneu sous gonflé et d'un pneu surgonflé.
On constate que plus la pression exercée au sol par le pneu Psol est élevée et plus le temps de passage de la bande de roulement sur le capteur de pression est court. Par ailleurs, plus la pression de gonflage Ppneu est élevée et plus le maximum de la pression exercée Psol est observé dans une plage de temps limitée. En d'autres termes, plus la pression de gonflage Ppneu est élevée et plus la forme de la courbe correspondante, avec la pression au sol Psol, présente un sommet pointu et étroit.
Comme indiqué précédemment, il existe une relation entre la pression de gonflage du pneu Ppneu et la pression exercée par ce dernier sur le sol Psol. En d'autres termes, il existe une relation, globalement linéaire et constatée expérimentalement, entre ces deux pressions. Il est donc possible, à partir de mesures de la pression exercée au sol par un pneu, selon différentes pressions de gonflage connues, d'établir expérimentalement une telle relation.
A partir des courbes C1 à C3 de la figure 4 on détermine la pression exercée au sol Psol en prenant en compte diverses valeurs remarquables, déterminée expérimentalement par la demanderesse. Ces valeurs remarquables sont choisies parmi trois valeurs de pression lues sur les courbes C1 à C3. Il s'agit soit de la pression mesurée à la moitié du temps total de mesure, notée Psolt, soit de la pression maximale mesurée, notée PsolM, soit de la pression moyenne mesurée, notée Psolm. Selon l'invention, il est possible d'utiliser une de ces valeurs ou une combinaison de deux ou trois de ces valeurs.

Ainsi, que l'on prenne en compte Psolt et/ou PsolM et/ou Psolm, en postulant que ces valeurs sont représentatives de Ppneu, la relation est déterminée expérimentalement, cela par type de pneu. Ainsi, pour un type de pneu donné, donc pour un modèle et une dimension donnés d'un pneu, on détermine les relations, avantageusement avec les conversions mentionnées, entre la pression exercée au sol Psol et la pression de gonflage du pneu Ppneu.

La demanderesse a constaté que ces relations sont applicables pour un type de pneu, quel que soit le manufacturier du pneu. Il est donc nécessaire d'établir ces relations pour chaque type de pneu utilisé.

On conçoit que ce qui est exposé précédemment est applicable lorsque un ou plusieurs capteurs de pression sont utilisés, donc lors de mesures effectuées en série.

La demanderesse a constaté néanmoins une imprécision et un manque de fiabilité des mesures observées lorsque le pneu n'est pas en contact permanent avec le ou les capteurs, cela du fait de mouvements dynamiques du véhicule, ces mouvements n'étant pas attendus.

La demanderesse a notamment constaté que des mouvements du pneu dans un plan globalement perpendiculaire à la surface de roulement du pneu induisent un contact dégradé entre le pneu et le ou les capteurs. En d'autres termes des mouvements d'écrasement et d'allégement exercés par le pneu sur le capteur influe sur la qualité de la mesure. Ces mouvements, que l'on peut assimiler à un sautillement du pneu sur la surface de roulement, sont aléatoires, tant en fréquence qu'en amplitude. Ils peuvent être dus, par exemple, à une suspension défectueuse du véhicule, entraînant un phénomène oscillatoire. Ils peuvent également être dus à une planéité défectueuse du chemin de roulage au niveau de la zone où se trouve les capteurs de pression entrainant également un phénomène oscillatoire. Le phénomène est d'autant plus marqué que l'amortissement du véhicule est défectueux et que la zone d'implantation des capteurs de pression n'est pas plane.

Lorsque des oscillations se produisent, on distingue notamment deux phases qui affectent la qualité de la mesure de la pression au sol Psol. Une première phase, dite d'écrasement, qui correspond à la partie basse du mouvement oscillatoire induit un écrasement du pneu sur le capteur de pression et donc, de facto, une pression au sol Psol supérieure à celle attendue, d'où une pression de gonflage Ppneu surévaluée. Une seconde phase, dite d'allégement, correspond à la partie haute du mouvement oscillatoire. Elle génère un contact minimal, voire dans certains cas une absence ponctuelle de contact, du pneu sur le capteur de pression. De ce fait, la pression au sol mesurée Psol est inférieure à la pression au sol attendue, d'où une pression de gonflage Ppneu sous-évaluée.

La demanderesse a également constaté, de manière surprenante, que deux pneumatiques, de même type, gonflés à la même pression Ppneu et montés sur des essieux différents d'un même véhicule peuvent présenter deux courbes illustrant la variation de la pression au sol Psol en fonction du temps sensiblement différentes. Les différences observées concernent l'amplitude et la forme des courbes.

Par ailleurs, les essais effectués par la demanderesse ont montré que la précision de la détermination de la pression de gonflage Ppneu est comprise dans une fourchette pouvant aller jusqu'à $\pm$ 1,5 bars par rapport à la pression réelle de gonflage.

Ces divers points ont amené la demanderesse à développer un procédé de mesure de la pression de gonflage Ppneu permettant de s'affranchir, ou du moins de limiter autant que possible, l'impact de ces phénomènes sur la précision de la mesure effectuée. En d'autres termes, le procédé objet de l'invention prend en compte d'autres éléments, mesurés ou calculés à partir du passage du pneu sur le ou les capteurs de pression, ces éléments étant également en relation avec la pression de gonflage du pneu Ppneu.

Ces nouveaux éléments sont au nombre de deux. Il s'agit, d'une part, de la longueur Lpneu de la partie de la bande de roulement du pneu qui est en contact avec le sol lors de son passage sur le ou les capteurs de pression et, d'autre part, de la forme F de la courbe illustrant la répartition des contraintes exercées au sol par le pneu en fonction du temps.

Il est connu que la surface de contact du pneu avec le sol, donc de facto avec le capteur de pression, varie en fonction de la pression de gonflage Ppneu, mais également en fonction de la charge appliquée sur le pneu, donc selon le nombre de passagers et/ou la quantité de marchandises dans le véhicule.

La demanderesse a utilisé le fait que, pour des véhicules équipés avec les mêmes pneus, et cela pour la majorité des types de pneus utilisés, la surface de contact du pneu avec le sol, lors de son roulement, ne varie globalement que dans le sens de la longueur, c'est-à-dire selon une direction parallèle à la direction de déplacement du pneu lors de son roulage, lorsque la pression de gonflage Ppneu varie.

Cette longueur Lpneu est calculée, à partir du temps de présence du pneu tpneu sur le capteur de pression et de la vitesse Vpneu du pneu lors de son passage sur le capteur, selon la relation suivante :

$$Lpneu = Vpneu \cdot tpneu$$

Le temps de présence du pneu tpneu sur le capteur est déterminé à partir de la courbe illustrant la variation de la pression au sol Psol en fonction du temps. Il convient d'effectuer la différence entre les deux valeurs du temps correspondant respectivement à la fin et au début de la mesure de la pression au sol Psol. En d'autres termes, l'intervalle du temps entre les deux valeurs du temps où Psol est nulle fournit le temps total de la mesure donc le temps de présence tpneu du pneu sur le capteur de pression. On conçoit que, avec plusieurs capteurs, on obtient autant de valeurs pour tpneu qu'il y a de capteurs de pression impliqués dans la mesure.

La vitesse Vpneu du pneu, lors de son roulement sur le capteur de pression, est, par exemple, mesurée, avantageusement, à partir de la distance qui sépare deux capteurs de pression alignés et destinés à mesurer la pression au sol Psol pour un même pneu et à partir de la différence, sur la courbe, entre les deux valeurs du temps correspondant au début de la mesure de la pression au sol pour chaque capteur de pression.

Dans d'autres modes de réalisation de l'invention, on utilise les deux valeurs du temps correspondant à la fin de la mesure de la pression au sol pour chaque capteur de pression ou les deux valeurs du temps correspondant au début et à la fin de la mesure pour un ou deux capteurs de pression. On conçoit qu'au-delà de l'utilisation de deux capteurs de pression, la vitesse Vpneu prise en compte est la moyenne des vitesses prises en compte pour les différents capteurs de pression. Ici, le moyen retenu pour la mesure de la vitesse permet d'effectuer la mesure avec les mêmes capteurs de pression. En variante non illustrée, d'autres moyens de mesure de la vitesse du pneu sont employés.

Par ailleurs, afin que la longueur Lpneu ne dépende que de la pression de gonflage Ppneu, il convient de s'affranchir de tout autre facteur susceptible de faire varier la longueur Lpneu, cela pour une même pression de gonflage Ppneu. En particulier, il convient de s'affranchir de la charge appliquée sur le pneu.

Pour cela, la longueur Lpneu est, selon l'invention, décomposée en deux termes. Le premier terme correspond à la longueur de contact du pneu lorsqu'il est soumis à une charge dite à vide, c'est-à-dire lorsque le véhicule sur lequel est monté le pneu est lui-même soumis à une charge nulle, à savoir sans passagers et/ou marchandises. Cette longueur, notée par la suite Lvide, ne dépend que de la pression de gonflage du pneu Ppneu.

Le second terme est représentatif de la charge appliquée sur le pneu. Pour cela, on pondère un facteur de charge, noté FC, par un coefficient noté K et dont la détermination sera détaillée plus loin. Le facteur de charge FC varie de la valeur 0 lorsque le véhicule est vide à la valeur 1, lorsque la charge du véhicule est maximale.

On conçoit que, pour un pneu monté sur un véhicule chargé entre 0 et 100% de la charge maximale, donc avec un facteur de charge FC variant de 0 à 1, la longueur mesurée Lpneu par le capteur de pression est égale à la Longueur à vide Lvide plus K fois le facteur de charge FC. La relation entre la longueur mesurée Lpneu par le capteur de pression et la Longueur à vide est donc :

$$Lpneu = Lvide + K \cdot FC$$

La valeur recherchée est, ici, Lvide car cette longueur de contact est uniquement fonction de la pression de gonflage du pneu Ppneu:

$$Lvide = Lpneu - K \cdot FC$$

On définit Lmin comme étant la longueur de contact du pneu mesurée par le capteur de pression lorsque, pour un pneu gonflé à la pression de gonflage nominale PpneuN, la charge qui lui est appliquée est minimale, c'est-à-dire lorsque le véhicule est vide. Dans ce cas FC=0 et Lpneu=Lmin, d'où :
Lvide=Lmin.

De même, on définit Lmax comme étant la longueur de contact du pneu mesurée par le capteur de pression lorsque, pour un pneu gonflé à la pression de gonflage nominale PpneuN, la charge du véhicule est maximum. Dans ce cas, FC=1 et Lpneu= Lmax, d'où:

$$Lvide = Lmax - K \cdot 1$$

Dans les deux relations indiquées précédemment, les longueurs à vide Lvide sont identiques puisqu'elles sont définies pour un pneu gonflé à la pression de gonflage nominale, PpneuN. Ainsi, la valeur du coefficient K est égale à la différence entre les deux longueurs : K = Lmax-Lmini.

Comme mentionné précédemment, le facteur de charge varie entre 0 et 1, selon la charge du véhicule. Pour déterminer le facteur de charge FC entre ces deux extrêmes, on s'appuie sur les hypothèses suivantes :

- La charge du véhicule est répartie uniformément sur tous les pneus du véhicule.
- La moyenne des pressions des pneus du véhicule est très proche de la pression nominale de gonflage d'un pneu. De ce fait, la moyenne des longueurs des pneus du véhicule correspond à la longueur d'un pneu à pression nominale avec la charge appliquée.

En appliquant ces hypothèses à la relation initiale entre la longueur mesurée Lpneu et la longueur Lvide à la pression de gonflage nominale et à la charge minimale, soit :
Lmoyen = Lvide + K· FC, avec Lmoyen étant la longueur de contact moyenne mesurée sur l'ensemble des pneus du véhicule.
avec K = Lmax-Lmin et Lvide=Lmin on obtient :

$$FC = (Lmoyen-Lmin) / (Lmax-Lmin)$$

Comme Lvide = Lpneu - K • FC, on en déduit :

$$Lvide = Lpneu – (Lmax- Lmin) • (Lmoyen - Lmin) / (Lmax-Lmin)$$

Une telle relation se simplifie en :

$$Lvide = Lpneu – (Lmoyen - Lmin)$$

Il est à noter que lorsque tous les pneus du véhicule sont gonflés à la pression de gonflage nominale PpneuN, alors Lpneu=Lmoyen et la relation Lvide=Lmin est vérifiée.
Il est à noter que, dans cette relation, Lpneu est une mesure obtenue lors du passage du pneu sur le capteur de pression, Lmoyen est une valeur calculée à partir des valeurs Lpneu mesurées pour tous les pneus d'un même véhicule et Lmin est une valeur définie expérimentalement pour un type de pneu et de véhicule en mesurant la longueur de contact Lpneu pour une pression de gonflage nominale PpneuN et une charge du véhicule FC=0, soit un véhicule vide.
On a ainsi déterminé une caractéristique Lvide qui ne dépend que de la pression de gonflage Ppneu.
Comme la longueur de contact du pneu à charge nulle, soit Lvide, est uniquement fonction de la pression de gonflage du pneu Ppneu, la relation inverse existe :

$$Ppneu= f (Lvide).$$

On conçoit que les fonctions f sont multiples : une fonction f donnée peut être spécifique à un pneu d'un véhicule ou commune à plusieurs pneus de ce même véhicule. Ces fonctions sont établies expérimentalement, par des mesures de longueurs de contact Lpneu de pneus dont les pressions de gonflage Ppneu sont connues.
La figure 5 illustre ainsi la relation entre la pression de gonflage d'un pneu Ppneu en fonction de la longueur de contact Lpneu déterminée expérimentalement. En l'espèce, les caractéristiques du pneu ayant servi à établir la courbe sont les suivantes : dimensions normalisées du pneu, selon la nomenclature en vigueur en Europe: 315/95R16, avec 315 la largeur du pneu en millimètres, 95 la hauteur du flanc par rapport à la largeur exprimée en pourcentage, R la construction interne du pneu, ici radiale, et 16 le diamètre intérieur du pneu en pouces. La courbe a été établie pour diverses pressions de gonflage.
On note que la longueur de roulement du pneu sur un ou des capteurs de pression donnés est d'autant plus grande que la pression de gonflage du pneu est faible.
Comme mentionné précédemment et illustré à la figure 4, on constate que les formes de courbes de la pression du pneu au sol Psol en fonction du temps, selon l'état de gonflage du pneu par rapport à la pression de gonflage nominale PneuN, sont très différentes et caractéristiques de l'état de gonflage du pneu. Les courbes, quelles que soient leurs amplitudes et longueurs, sont d'autant plus aplaties au niveau de leurs sommets respectifs que la pression de gonflage Pneu est faible.
Ainsi, par rapport à la courbe C1 correspondant à une pression de gonflage nominale, le même pneu sur-gonflé présente une courbe C3 au sommet plus bombé, alors que le même pneu sous-gonflé produit une courbe C2 aplatie au sommet en creux. En d'autres termes, la courbe C2 correspondant à un pneu sous gonflé présente un sommet configuré en relief négatif par rapport à la courbe C1 correspondant à la pression nominale de gonflage. A l'inverse, un pneu sur gonflé génère une courbe C3 au sommet en relief positif par rapport au sommet de courbe correspondant à la pression nominale de gonflage.

A partir de ces constats, la demanderesse a décidé de prendre en compte la forme des courbes comme étant une caractéristique de la pression de gonflage Ppneu. Pour cela, la demanderesse a développé une caractérisation numérique de la forme de la courbe. La caractérisation numérique retenue s'est avérée être une de celles qui donnent la meilleure représentation de la forme de la courbe, étant entendue que d'autres relations existent. A titre d'exemples non limitatifs on peut citer la prise en compte du rapport entre la pression maximum et la pression moyenne ou la pente moyenne du début de la courbe.

La relation développée et validée par la demanderesse consiste à quantifier la forme de la courbe, notée Forme, par le rapport entre la valeur de la pression exercée au sol prise au centre de la courbe, donc la pression constatée à la moitié du temps, notée Psolt, et la pression exercée au sol moyenne Psolm.

$$Forme = Psolt \ / \ Psolm$$

Dans la mesure où l'on constate que la forme de la courbe est directement fonction de la pression de gonflage du pneu Ppneu, on conçoit que la réciproque est également vraie : la pression de gonflage Ppneu est directement fonction de la forme de la courbe :

$$Ppneu = f \ (Forme)$$

La demanderesse a constaté que les relations fonctionnelles ou fonctions $f$ sont applicables, non seulement à un type de pneu, mais également pour un essieu donné sur un même véhicule. Afin de définir expérimentalement de telles fonctions, la demanderesse a effectué des mesures de forme, à partir de courbes illustrant la pression exercée au sol Psol en fonction du temps avec des pneus dont la pression de gonflage est connue. Comme précédemment, ces différentes fonctions f seront utilisées pour l'élaboration de modèles flous permettant de déterminer la pression de gonflage du pneu Ppneu en fonction d'au moins deux paramètres choisis parmi la pression au sol Psol, la longueur de la bande de roulement à vide Lvide ou la forme de la courbe notée Forme.

La figure 6 illustre ainsi l'évolution de la pression de gonflage Ppneu selon la forme de la courbe, pour des conditions de mesures suivantes : pneu de métro de dimensions normalisées 315/95R16 gonflé à des pressions variant entre 6 bars et 13 bars. Il est à noter que la forme n'a pas d'unité puisqu'elle est calculée à partir d'un rapport de pressions.

En prenant en compte, pour un capteur de pression donné, non seulement la pression exercée au sol Psol par le pneu mais également des éléments obtenus par calcul, à savoir la longueur de roulage du pneu Lvide et la forme de la courbe Forme, la demanderesse dispose de trois éléments dépendant, chacun, de la caractéristique recherchée, à savoir de la pression de gonflage du pneu Ppneu.

La demanderesse a choisi de mettre en œuvre l'invention par un calculateur flou pour déterminer Ppneu à partir d'au moins deux des trois grandeurs Psol, Lvide, Forme. L'un des intérêts de l'utilisation de la logique floue est qu'elle permet la modélisation des imperfections des données mesurées et surtout de pouvoir appliquer des réglages différents en fonction des types de pneus utilisés et de leurs positions sur le véhicule. Un autre intérêt de la logique floue est la possibilité d'intégrer facilement d'autres paramètres dans le calcul de la pression, tels que la température ambiante, l'hygrométrie ambiante ou la température du pneu. Par température et hygrométrie ambiantes, on désigne la température et l'hygrométrie relevées au niveau des capteurs de pression.

Pour la mise en œuvre de la logique floue, il convient de caractériser les sous-ensembles flous de chacune des grandeurs d'entrées Psol, Lvide et Forme. Pour ce faire, on utilise les enregistrements des mesures effectuées avec des véhicules équipés de pneus gonflés à des pressions définies. On dispose ainsi de mesures pour des pneus sous-gonflés, gonflés nominalement et sur-gonflés, les mesures étant en nombre suffisant pour couvrir les différentes conditions de gonflage des pneus.

Pour simplifier les réglages, à titre d'exemple non limitatif, il est avantageux de limiter le nombre de sous-ensembles flous à cinq pour chacune des trois grandeurs d'entrées Psol, Lvide et Forme. Les sous-ensembles retenus sont ici: très dégonflé 7A, dégonflé 7B, nominal 7C, sur-gonflé 7D et très sur-gonflé 7E.

En exploitant les mesures collectées et en appliquant la définition des ensembles flous, on obtient les fonctions d'appartenance aux sous-ensembles flous définis pour chaque grandeur d'entrée. La figure 7 illustre les fonctions d'appartenance obtenues pour la grandeur Psol. Ici, l'axe des ordonnées n'a pas d'unité. Il correspond à un degré d'appartenance à chaque sous-ensemble, compris entre 0% et 100%.Par exemple, lorsque Psol est proche de zéro la courbe 7A est proche de 100% alors que les autres courbes sont voisines de zéro. Autre exemple: lorsque l'on considère la Psol au croisement des courbes 7B et 7C, Psol est voisin de 50% pour ces courbes, les autres courbes étant voisines de zéro.

Les sous-ensembles flous ainsi obtenus définissent les caractéristiques des données d'entrées d'un modèle flou auquel il est nécessaire d'ajouter des règles floues. On peut citer ici, à titre d'exemple, la règle suivante : si Psol est nominale, Lvide et Forme étant aussi nominales, alors la pression du pneu Ppneu est nominale.

Dans le cadre de l'application de l'invention pour un métro sur pneus, la demanderesse a effectué différents constats relatifs aux grandeurs d'entrées Psol, Lvide, Forme.

La grandeur d'entrée Psol présente un niveau de répétabilité élevé, mais est faussée lors des mouvements verticaux dynamiques du véhicule, donc lors des phases d'allégement ou d'écrasement des pneus, lorsque ces dernières sont présentes.

La grandeur d'entrée Lvide présente un niveau de répétabilité moins élevé que Psol. Elle est fortement dépendante des phases d'allégement ou d'écrasement des pneus et permet de compenser les erreurs sur Psol.

La grandeur d'entrée Forme est très fiable puisqu'elle présente le niveau de répétabilité le plus élevé. Elle est donc peu sujette aux variations, même dans les phases d'allégement ou d'écrasement des pneus.

Le comportement des grandeurs d'entrée, donc de Psol, Lvide et Forme, selon les divers sous-ensembles est présenté dans le tableau 1 ci-dessous. Ici les termes « normal » et « nominal » sont synonymes.

Tableau 1

| Cas de mesure | Psol | Lvide | Forme |
|---|---|---|---|
| 1 - Ppneu nominale | normale | normale | normale |
| 2 - Ppneu très dégonflé | Très dégonflée | Très dégonflée | Très dégonflée |
| 3 - Ppneu dégonflé | Dégonflée | Dégonflée | Dégonflée |
| 4 - Ppneu sur-gonflé | Sur-gonflée | Sur-gonflée | Sur-gonflée |
| 5 - Ppneu très sur-gonflé | Très sur-gonflée | Très sur-gonflée | Très sur-gonflée |
| 6 - Ppneu nominale en phase d'allègement | Dégonflée | Sur-gonflé | Normale |
| 7 - Ppneu nominale en phase d'écrasement | Sur-gonflée | Dégonflée | Normale |
| 8-Ppneu nominale en phase de fort allègement | Très dégonflée | Très sur-gonflée | Normale |
| 9-Ppneu nominale en phase de fort écrasement | Très sur-gonflée | Très dégonflée | Normale |

Dans le cas des mesures référencées 6 à 9, les grandeurs Psol et Lvide se compensent et, en ajoutant la stabilité de la grandeur Forme, la grandeur de sortie du calculateur flou Ppneu n'est plus sous-évaluée (cas des mesures 6 et 8) ou surévaluée (cas des mesures 7 et 9).

L'approche dans la détermination des règles floues peut être scindée en deux parties. La première partie consiste à identifier des règles issues du comportement intrinsèque des pneumatiques. Ces règles permettent d'obtenir une valeur de sortie Ppneu déterminée par le calculateur flou, satisfaisante dans la majorité des cas.

La seconde partie consiste à déterminer des règles floues pour les cas particuliers des mesures (allégement et écrasement du pneu par exemple). Ce second jeu de règles floues assure la stabilité et la robustesse de la valeur de sortie Ppneu du calculateur flou.

En prenant en compte non seulement la pression exercée au sol Psol mais également les grandeurs d'entrées calculés Lvide et Forme à partir des mesures sur le ou les capteurs de pression, et en les exploitant dans un calculateur flou, la demanderesse a développé un procédé de mesure dont la précision et la fiabilité sont accrues, tout en s'affranchissant des aléas de mesure dus aux mouvements oscillatoires du pneu lors de son passage sur le ou les capteurs de pression.

A titre d'exemple non limitatif, l'invention a été mise en œuvre pour évaluer la pression d'un pneu dont la pression de gonflage réelle Ppneu est de 7,5 bar :

Dans cet exemple, la mesure de la pression au sol est : Psol = 5,09 bar et, après conversion, le calcul de Ppneu est à 6,26 bar. La pression de ce pneu est sous-évaluée. Une telle sous-évaluation correspond au cas d'un pneu en phase d'allégement, donc lorsque le pneu n'est pas de facto en contact optimal avec le capteur de pression. Pour ce même pneu, l'invention fournit, en plus de Psol, des valeurs de la forme de la courbe Forme de 1,12 et de la longueur de la bande de roulement Lvide de 0,180 m.

Ces valeurs, après conversion, correspondent respectivement à 7,18 bar et 10,29 bar. En combinant à l'aide du calculateur flou les trois grandeurs Psol, Forme et Lvide, l'invention indique une pression de gonflage Ppneu de 7,51 bar.

L'amélioration de la détermination de la pression de gonflage est significative puisque l'écart par rapport à la pression réelle passe de 16% à 0,13%. Grace à l'invention on obtient une valeur fiable, représentative de la pression réelle de gonflage, en s'affranchissant des aléas de la mesure.

Dans un autre exemple, toujours pour un pneu dont la pression réelle de gonflage est de 7,5 bar, la mesure de Psol est de 9,09 bar et, après conversion, le calcul de Ppneu est à 11,72 bar. La pression de ce pneu est donc surévaluée, ce qui correspond à une mesure effectuée sur un pneu en phase d'écrasement, l'appui du pneu sur le capteur de pression est maximal, le pneu retombant sur le capteur de pression après une phase d'allégement.

Pour ce même pneu l'invention donne des valeurs de la forme de la courbe Forme de 1,16 et pour la longueur de roulement Lvide une valeur de 0,231 m. Après conversion, ceci correspond respectivement à 8,12 bar et 3,19 bar. En combinant les valeurs obtenues Psol, Forme et Lvide, l'invention calcule une pression de gonflage Ppneu de 8,08 bar. L'amélioration de la mesure est significative ici aussi puisque l'on passe d'un écart de 56% à un écart de 7,7%.

La demanderesse a effectué une simulation basée sur 2 320 mesures de la pression de gonflage de pneus. Elle a constaté que l'invention permet de diviser par 3,5 le taux de mesure en dehors de l'intervalle [PpneuRéelle - 1.5 bar ; PpneuRéelle + 1.5 bar]. L'invention permet ainsi d'obtenir une valeur tout à fait représentative de la pression de gonflage d'un pneu, sans modifier les moyens de mesure, à savoir les capteurs de pression, et en s'affranchissant des principaux paramètres affectant une telle mesure lors du déplacement du véhicule.

### Revendications

1. Procédé de mesure de la pression de gonflage des pneumatiques (Ppneu) équipant un véhicule en déplacement, comportant au moins les étapes suivantes lors desquelles :

   - a) on mesure une contrainte définie par la pression exercée sur au moins un capteur de pression (1) fixé dans une partie (2) d'un chemin de roulage (4) sur lequel se déplace un pneumatique (3), par un pneumatique (3, 3', 3", 3''') roulant sur ledit capteur (1),
   - b) on mesure le temps (t) pendant lequel le pneumatique (3, 3', 3", 3''') roule sur ledit capteur (1) fixé au chemin de roulage, ce dernier représentant une surface de contact connue,
   - c) on établit, lors du passage du pneumatique (3, 3', 3", 3''') sur ledit capteur (1), une courbe (C1, C2, C3) représentant la répartition des contraintes (Psol) exercées par le pneumatique (3, 3', 3", 3''') sur ladite surface de contact en fonction du temps (t),
   - d) on détermine la pression de gonflage (Ppneu) du pneu (3, 3', 3", 3''') à l'aide d'un calculateur, avec une programmation choisie parmi une programmation algorithmique ou une logique floue, intégrant au moins un modèle établi à partir de mesures effectuées aux étapes a) à c) sur des pneumatiques (3, 3', 3", 3''') dont la pression de gonflage est connue,

   **caractérisé en ce que** le procédé comprend au moins l'étape suivante :
   e) lors de l'étape d), le modèle utilisé prend en compte deux autres paramètres, à savoir : - la longueur Lpneu de la bande de roulement du pneumatique (3, 3', 3", 3''') en contact avec ledit capteur (1) fixé au chemin de roulage, déterminée lors de la mesure effectuée à l'étape b), la vitesse du pneu étant connue, et

   - lors d'une étape supplémentaire g) préalable à l'étape d), la quantification de la forme (Forme) de la courbe (C1, C2, C3) obtenue à l'étape c) selon une relation prenant en compte la pression exercée à mi-temps (Psolt) du passage du pneu (3) sur le capteur (1) fixé au chemin de roulage et la pression moyenne (Psolm) exercée par le pneu (3) lors de son passage sur le capteur (1).

2. Procédé selon la revendication 1, **caractérisé en ce que**, lors d'une étape supplémentaire f), préalable à l'étape d), la longueur Lpneu de la bande de roulement du pneumatique (3, 3', 3", 3''') en contact avec ledit capteur (1) fixé au chemin de roulage lors de la mesure effectuée à l'étape a) est établie selon une relation, définie par : Lvide=Lpneu-K.FC, prenant en compte la charge appliquée audit pneumatique, avec Lvide étant la longueur de contact du pneu sur le chemin de roulage lorsqu'il est soumis à une charge dite à vide, donc un pneu monté sur un véhicule sans passager et/ou marchandise, K étant un coefficient correspondant à la différence entre les longueurs de la bande de roulement à charge maximale Lmax donc un pneu monté sur un véhicule avec une charge maximale et à vide Lvide et FC un facteur de charge variant de 0 à 1 selon que le véhicule est à vide ou à charge maximale, ledit facteur de charge FC étant déterminé par la relation FC=(Lmoyen-Lmin)/(Lmax-Lmin), avec Lmoyen étant la longueur de contact moyenne mesurée sur l'ensemble des pneus du véhicule, Lmax et Lmin étant respectivement les longueurs de contact du pneu mesurées par le capteur de pression avec un véhicule à charge maximale et à vide,les pneus étant gonflés à la pression de gonflage nominale PpneuN .

3. Procédé selon l'une des revendications précédentes, **caractérisé en ce que** les étapes a) à c) sont réalisées avec plusieurs capteurs de pression (1) fixés au chemin de roulage et que ce sont chacune des valeurs obtenues par capteur qui sont utilisées pour les étapes d) et e).

## Patentansprüche

1. Verfahren zur Messung des Reifendrucks von Reifen (Ppneu/Reifendruck), die ein Fahrzeug in Bewegung ausstatten, das mindestens die folgenden Schritte umfasst, bei welchen:

   - a) eine Belastung, die durch den Druck definiert ist, der auf mindestens einen Drucksensor (1) ausgeübt wird, der in einem Teil (2) einer Fahrbahn (4) befestigt ist, auf der sich ein Reifen (3) bewegt, durch einen Reifen (3, 3', 3", 3"'), der auf dem Sensor (1) fährt,
   - b) Messen der Zeit (t), während der der Reifen (3, 3', 3", 3"') auf dem Sensor (1), der auf der Fahrbahn befestigt ist, fährt, wobei Letzterer eine bekannte Kontaktoberfläche darstellt,
   - c) während der Passage des Reifens (3, 3', 3", 3"') auf dem Sensor (1), Erstellen einer Kurve (C1, C2, C3), die die Verteilung der Belastungen (Psol), die von dem Reifen (3, 3', 3", 3") auf der Kontaktoberfläche ausgeübt werden, in Abhängigkeit von der Zeit (t) darstellt,
   - d) Bestimmen des Drucks (Ppneu) des Reifens (3, 3', 3", 3"') mit Hilfe eines Computers mit einer Programmierung, die aus einer algorithmischen Programmierung oder Fuzzy-Logik ausgewählt ist, die mindestens ein Modell integriert, das ausgehend von Messungen ermittelt wird, die bei den Schritten a) bis c) auf Reifen (3, 3', 3", 3"'), deren Reifendruck bekannt ist, ausgeführt wurden,

   **dadurch gekennzeichnet, dass** das Verfahren mindestens den folgenden Schritt umfasst:
   e) bei dem Schritt d), Berücksichtigung durch das verwendete Modell zweier anderer Parameter, nämlich: - der Länge Lpneu der Lauffläche des Reifens (3, 3', 3", 3"') in Kontakt mit Sensor (1), der auf der Fahrbahn befestigt ist, die bei der Messung bestimmt wird, die bei Schritt b) ausgeführt wird, wobei die Geschwindigkeit des Reifens bekannt ist, und, während eines zusätzlichen Schritts g) vor dem Schritt d), der Quantifizierung der Form (Forme) der Kurve (C1, C2, C3), die bei Schritt c) erhalten wird, gemäß einer Beziehung, die den Druck berücksichtigt, der zur Halbzeit (Psolt) der Passage des Reifens (3) auf dem Sensor (1), der auf der Fahrbahn befestigt ist, ausgeübt wird, und des mittleren Drucks (Psolm), der von dem Reifen (3) bei seiner Passage auf dem Sensor (1) ausgeübt wird.

2. Verfahren nach Anspruch 1, **dadurch gekennzeichnet, dass** bei einem zusätzlichen Schritt f) vor dem Schritt d) die Länge Lpneu der Lauffläche des Reifens (3, 3', 3", 3"') in Kontakt mit dem Sensor (1), der auf der Fahrbahn befestigt ist, bei der Messung, die bei dem Schritt a) ausgeführt wird, gemäß einer Beziehung ermittelt wird, die definiert ist durch: Lvide=Lpneu-K.FC, unter Berücksichtigung der Last, die auf den Reifen ausgeübt wird, wobei Lvide die Kontaktlänge des Reifens auf der Fahrbahn ist, wenn er einer sogenannten Fahrt ohne Last unterliegt, also ein Reifen, der auf einem Fahrzeug ohne Insassen und/oder Waren montiert ist, wobei K ein Koeffizient ist, der der Differenz zwischen den Längen der Lauffläche bei maximaler Last Lmax entspricht, also ein Reifen, der auf ein Fahrzeug mit maximaler Last und ohne Last Lvide montiert ist, und FC ein Lastfaktor ist, der von 0 bis 1 je nach dem variiert, ob das Fahrzeug leer ist oder maximale Last aufweist, wobei der Lastfaktor FC durch die Beziehung FC = (Lmoyen-Lmin)/(Lmax-Lmin) bestimmt wird, wobei Lmoyen die mittlere Kontaktlänge ist, die auf allen Reifen des Fahrzeugs gemessen wird, wobei Lmax und Lmin jeweils die Kontaktlängen des Reifens sind, die von dem Drucksensor bei einem Fahrzeug bei maximaler Last und ohne Last gemessen werden, wobei die Reifen auf den nominalen Reifendruck PpneuN aufgeblasen sind.

3. Verfahren nach einem der vorstehenden Ansprüche, **dadurch gekennzeichnet, dass** die Schritte a) bis c) mit mehreren Drucksensoren (1), die auf der Fahrbahn befestigt sind ausgeführt werden, und dass es jeder der Werte ist, die von dem Sensor erhalten werden, die für die Schritte d) und e) verwendet werden.

## Claims

1. A method for measuring the inflation pressure of tyres (Ppneu) fitted to a moving vehicle, comprising at least the following steps during which:

   - a) a stress, which is defined by the pressure exerted on at least one pressure sensor (1) fixed in a part (2) of a rolling track (4) on which a tyre (3) moves, is measured by a tyre (3, 3', 3", 3"') rolling on said sensor (1),

- b) the time (t) during which the tyre (3, 3', 3", 3"') rolls on said sensor (1) fixed to the rolling track is measured, said track representing a known contact surface,
- c) a curve (C1, C2, C3) representing the distribution of stresses (Psol) exerted by the tyre (3, 3', 3", 3"') on said contact surface as a function of time (t) is established during the passage of the tyre (3, 3', 3", 3"') over said sensor (1),
- d) the inflation pressure (Ppneu) of the tyre (3, 3', 3", 3"') is determined using a computer, with programming chosen from algorithmic or fuzzy logic programming, incorporating at least one model established from measurements carried out in steps a) to c) on tyres (3, 3', 3", 3"') for which the inflation pressure is known,

**characterised in that** the method comprises at least the following step:
e) during step d), the model used takes into account two other parameters, namely: - the length Lpneu of the tread of the tyre (3, 3', 3", 3"') in contact with said sensor (1) fixed to the rolling track, determined during the measurement carried out in step b), the speed of the tyre being known, and - during an additional step g) prior to step d), the quantification of the shape (Shape) of the curve (C1, C2, C3) obtained in step c) according to a relationship taking into account the pressure exerted at mid-time (Psolt) of the passage of the tyre (3) over the sensor (1) fixed to the rolling track and the average pressure (Psolm) exerted by the tyre (3) during its passage over the sensor (1).

2. The method according to claim 1, **characterised in that**, during an additional step f), prior to step d), the length Lpneu of the tread of the tyre (3, 3', 3", 3"') in contact with said sensor (1) fixed to the rolling track during the measurement carried out in step a) is established according to a relationship, defined by: Lvide = Lpneu-K.FC, taking into account the load applied to said tyre, Lvide being the contact length of the tyre on the rolling track when it is subjected to a load referred to as the empty load, i.e. a tyre mounted on a vehicle without any passenger and/or goods, K being a coefficient corresponding to the difference between the lengths of the tread at maximum load Lmax, i.e. a tyre mounted on a vehicle with a maximum load, and empty load Lvide, and FC being a load factor varying from 0 to 1 depending on whether the vehicle is at empty or maximum load, said load factor FC being determined by the relationship FC = (Lmoyen-Lmin)/(Lmax-Lmin), Lmoyen being the average contact length measured over the set of tyres of the vehicle, Lmax and Lmin being the contact lengths of the tyre measured by the pressure sensor with a vehicle at maximum load and empty load, respectively, the tyres being inflated to the nominal inflation pressure PpneuN.

3. The method according to one of the preceding claims, **characterised in that** steps a) to c) are carried out with several pressure sensors (1) fixed to the rolling track and **in that** each of the values obtained by the sensor is used for the steps d) and e).

**Fig. 3A**

**Fig. 1**

**Fig. 3B**

**Fig. 3C**

**Fig. 2A**    **Fig. 2B**    **Fig. 2C**

P pneu
(bar)

**Fig. 6**

Forme

P pneu
(bar)

**Fig. 5**

L vide
(m)

P sol
(bar)

C3

C1

**Fig. 4**

C2

temps
(s)

7A

7B

7C

7D

7E

P sol
(bar)

**Fig. 7**

## RÉFÉRENCES CITÉES DANS LA DESCRIPTION

**Documents brevets cités dans la description**

- DE 10210026730 A